# EUROPÄISCHE PATENTSCHRIFT

(11) **EP 1 544 137 B1**
(45) Veröffentlichungstag und Bekanntmachung des Hinweises auf die Patenterteilung: **21.02.2007**
(21) Anmeldenummer: 04078402.7
(22) Anmeldetag: 14.12.2004
(51) Int. Cl.: B65G 53/66

(54) **Anlage zum Ausblasen von Kesselwagen und Silofahrzeugen und Fördern des ausgeblasenen Gutes über lange Strecken**
Installation for the pneumatic unloading of tank cars and silo vehicles and feeding the unloaded bulk material over long distances
Dispositif pour décharger des wagons citernes et des véhicules-silos et pour transporter la matière en vrac déchargée sur de longues distances

(30) Priorität: 18.12.2003 DE 10359711; 27.01.2004 DE 102004004520
(43) Veröffentlichungstag der Anmeldung: 22.06.2005
(73) Patentinhaber: Beckschulte Verfahrenstechnik, 51145 Köln (DE)
(72) Erfinder: Beckschulte, Fritz, 51145 Köln (DE)
(74) Vertreter: Berkenfeld, Helmut

(56) Entgegenhaltungen:
- EP-A- 1 369 365
- US-A- 4 412 762
- US-A- 5 618 136

## Beschreibung

Die Erfindung betrifft eine Anlage zum Ausblasen von mit staub- oder granulatförmigem Gut gefüllten Eisenbahn-Kesselwagen oder Straßen-Silofahrzeugen und Fördern des Gutes durch eine Förderleitung über Strecken von bis zu einigen hundert Metern in ein oder mehrere Silos, mit einem Kompressor zum Erzeugen von Druckluft, mit einer Leitung zwischen dem Kompressor und den Kesselwagen oder den Silofahrzeugen und mit einer Verbindung zwischen diesen und der Förderleitung, wobei die vom Kompressor abgehende Druckluft in einen Teil zum Ausblasen der Kesselwagen oder Silofahrzeuge und einen Teil zum Fördern des Gutes durch die Förderleitung aufgeteilt wird.

Das Ausblasen von Kesseln oder Silos mit Druckluft und das pneumatische Fördern des auszublasenden Gutes über eine Förderleitung bis zu einem oder mehreren Silos ist bekannt. Bekannt ist eine Einrichtung (DE 196 50 457 C2) zum Entleeren von Trockenbaustoffe enthaltenden Kesseln, die auf das dosierte Entleeren der Kessel und das dosierte Fördern der Trockenbaustoffe ohne rotierende Teile energiesparend und verschleißarm ausgelegt ist. Das Fördern über lange Strecken spielt bei dieser bekannten Einrichtung keine Rolle. Bekannt ist weiter ein Verfahren (DE 31 45 668 C2) zum pneumatischen Fördern von Stäuben und Schüttgütern aus einem Silofahrzeug in ein Vorratssilo. Hierzu werden zwei Schläuche an das Fahrzeug angeschlossen. Über einen Schlauch wird ein Gasgemisch zum Entleeren des Fahrzeugsilos eingeleitet. Der andere Schlauch führt über eine Förderleitung zum Vorratssilo. Lange Förderleitungen, die das Risiko eines Verstopfens aufweisen können, werden nicht angesprochen. Bekannt ist schließlich noch eine Druckluftanlage (DE 85 11 061 U1), mit der die Silos eines Silofahrzeugs für rieselfähiges Schüttgut entleert werden. Offensichtlich ist diese bekannte Druckluftanlage nur für das Fördern über kurze Strecken gedacht. Bekannt ist eine Anlage (US-A-4 412 762) zum pneumatischen Entleeren von Vorratsbehältern. In diesen Vorratsbehältern werden insbesondere schwer fließfähige Stoffe, wie Calciumcarbonat und Titandioxid, gelagert. Zum Vermeiden eines Zusammenklumpens dieser Stoffe im Vorratsbehälter dient ein über seinem Auslaß angebrachter Vibrator. Dieser versetzt den Vorratsbehälter und die in ihm gelagerten Stoffe in Schwingung. Schwingungen mit großer Amplitude können die Behälter jedoch beschädigen oder die in ihm gelagerten Stoffe sogar weiter verdichten. Deshalb wird die vom Kompressor abgehende Druckluft in einen Teil zum Ausblasen des Vorratsbehälters und in einen Teil zum Fördern der Stoffe durch die Förderleitung aufgeteilt, in die die Stoffe nach dem Austritt aus dem Vorratsbehälter eintreten.

Abhängig von der Fließfähigkeit, der Korngröße, der Feuchtigkeit oder Trockenheit und anderen Eigenschaften des Gutes kann dieses beim Stand der Technik nur über kurze Strecken gefördert werden. Bei langen Förderstrecken, wobei lang schon bei unter einhundert Metern beginnen kann, kann das Gut sich in der Förderleitung stauen oder verklumpen und diese zusetzen. Dies bedeutet, daß die Druckluftzufuhr und damit die gesamte Förderung unterbrochen und die Leitung gereinigt werden muß. Hierzu müssen Kupplungen zwischen Leitungsabschnitten der Förderleitung gelöst, die einzelnen Leitungsabschnitte voneinander getrennt und diese durchgängig gemacht werden. Hierzu bedarf es geschulten Personals, und es kostet Zeit. Gut geht verloren. Bei toxischem Gut muß weiter mit großer Sorgfalt gearbeitet werden. Die staub- und granulatförmigen Güter werden häufig auch mit Straßen-Silofahrzeugen transportiert. Diese können bis dicht an die Silos heranfahren, so daß die Förderleitungen kurz sein können. Wegen der auf die LKW-Spediteure zukommenden Maut wird der Transport mit Straßen-Silofahrzeugen in Kürze unbezahlbar teuer. Man besinnt sich wieder auf den Transport mit der Bahn mit Eisenbahn-Kesselwagen. Wegen des Bevorzugens des Transports über die Straße wurde der Bau von Gleisanschlüssen in den letzten Jahrzehnten vernachlässigt. Die noch aus alten Zeiten vorhandenen Gleisanschlüsse liegen an heute ungünstigen Stellen, und die Entfernung zwischen ihnen und den mit dem Gut zu befüllenden Silos kann mehrere hundert Meter betragen. Bei Fördern des Gutes über diese Entfernungen treten die oben genannten Schwierigkeiten auf.

Hiervon ausgehend liegt der Erfindung die Aufgabe zu Grunde, eine Möglichkeit zu finden, staub- oder granulatförmiges Gut pneumatisch problemlos und ohne die Gefahr eines Zusetzens der Föderleitung auch über lange Stecken in der Größenordnung von bis zu mehreren hundert Metern zu fördern.

Die Lösung für diese Aufgabe ergibt sich nach der Erfindung mit einer Anlage der eingangs genannten Gattung dadurch, daß in der Verbindung zwischen den Kesselwagen oder Silofahrzeugen und der Förderleitung ein Druckbehälter liegt, der an seinem Austrittsende eine steuerbare Auslaufklappe aufweist und diese in Abhängigkeit von dem Druck in der Förderleitung gesteuert wird. Sie wird bei einem Ansteigen dieses Druckes in Schließstellung verstellt, und umgekehrt.

Durch das Aufteilen der Luft vom Kompressor in Ausblas- und Förderluft wird, wie aus der weiter oben beschriebenen ähnlichen Anlage für sich allein bekannt, nur ein Teil der gesamten Luft durch die Kessel oder Silos geleitet. Die Querschnitte von deren Eintritts- und Ausstrittsstutzen sind zu gering, um die gesamte zum Fördern benötigte Luft ohne wesentlichen Druckabfall durch diese durchzuleiten. Zum Fördern des Material-Luftgemisches über lange Strecken braucht man weiter Regel- und Steuereinrichtungen. Diese fehlen an den Eisenbahn-Kesselwagen und Straßen-Silofahrzeugen. Anzumerken ist weiter, daß die Eisenbahn-Kesselwagen einen zulässigen Betriebdruck von maximal 2,5 bar_{U} und die Straßen-Silofahrzeuge einen zulässigen Betriebsdruck von maximal 2 bar_{U} aufweisen. Die zum Fördern des Gutes über lange Strecken notwendigen Drucke liegen höher. Damit gibt es mehrere Gründe, die ein Durchleiten der Förderluft durch die Kessel oder Silos verunmöglichen.

Der erfindungsgemäße Druckbehälter bildet einen Zwischenspeicher für das zu fördernde Gut, wobei dessen im Druckbehälter zwischengespeichertes Volumen von der Stellung der Auslaufklappe abhängt. Bei einem in der Förderleitung beginnenden Stau mit der Gefahr eines beginnenden Zusetzens der Förderleitung steigt der Druck in dieser an und die Auslaufklappe wird in Schließrichtung verstellt. Weniger Gut strömt nach und der Stau baut sich vor Aufbau eines tatsächlichen Zusetzens ab. Bei Durchlauf eines zu geringen Gutvolumens durch die Förderleitung wird diese nicht ausreichend genutzt und der Druck fällt ab. Die Auslaufklappe wird in Öffnungsrichtung verstellt, eine größeres Volumen Gut fließt aus dem Druckbehälter beziehungsweise Zwischenspeicher ab und das Durchlaufvolumen durch die Förderleitung erreicht wieder seinen Sollwert.

Zum Steuern der Auslaufklappe sieht die Erfindung ein mit Transmitter bezeichnetes Steuergerät vor, das mit einer Druckmeßleitung an die Förderluftleitung und mit einer Steuerleitung an die Auslaufklappe angeschlossen ist.

Zweckmäßig ist der Kompressor über eine Druckluft-Zuleitung an einen Eisenbahn-Kesselwagen oder ein Silofahrzeug anschließbar und über eine weitere Druckluft-Zuleitung an die Förderleitung angeschlossen.

Die Erfindung sieht weiter vor, daß der Druckbehälter an seinem unterem Ende einen einen Doppelmantel aufweisenden Konus aufweist, die Innenwand des Doppelmantels porös ist und der Doppelmantel über eine vom Steuergerät gesteuerte Zuluftleitung mit Auflockerungsluft beschickt wird.

In der Förderleitung liegt zweckmäßig im Bereich des Auslaufs aus dem Druckgefäß unter der Auslaufklappe eine Auflockerungs-Förderdüse. Eine für die erfindungsgemäßen Zwecke brauchbare Auflockerungs-Förderdüse bildet den Gegenstand des DE Patentes 2.206.763. Diese Auflockerungs-Förderdüse bewirkt, daß das aus dem Auslauf des Druckbehälters austretende Gut gleichmäßig von der über sie eintretenden Druckluft erfasst und in die Förderleitung geblasen wird.

Schließlich sieht die Erfindung noch einen im Luftweg hinter dem Kompressor liegenden Luftaufteiler vor. Er teilt die Luft in den den Eisenbahn-Kesselwagen oder Straßen-Silofahrzeugen zuzuführenden und den der Förderleitung zuzuführenden Teil auf.

Am Beispiel der in der Zeichnung gezeigten Ausfühunrgsform wird die erfindungsgemäße Anlage nun weiter beschrieben.

In der Zeichnung ist
Figur 1 eine schematische vereinfachte Darstellung einer Anlage,
Figur 2 eine schematische vereinfachte Darstellung, teilweise im Schnitt, des Druckbehälters, des Steuergerätes und der zum Druckbehälter führenden und von diesem abgehenden Leitungen, und
Figur 3 in vergrößerten Maßstab ein Teilschnitt durch den unteren Teil des Druckbehälters mit dem Doppelmantel, der Auslaufklappe und der Auflockerungs-Förderdüse.

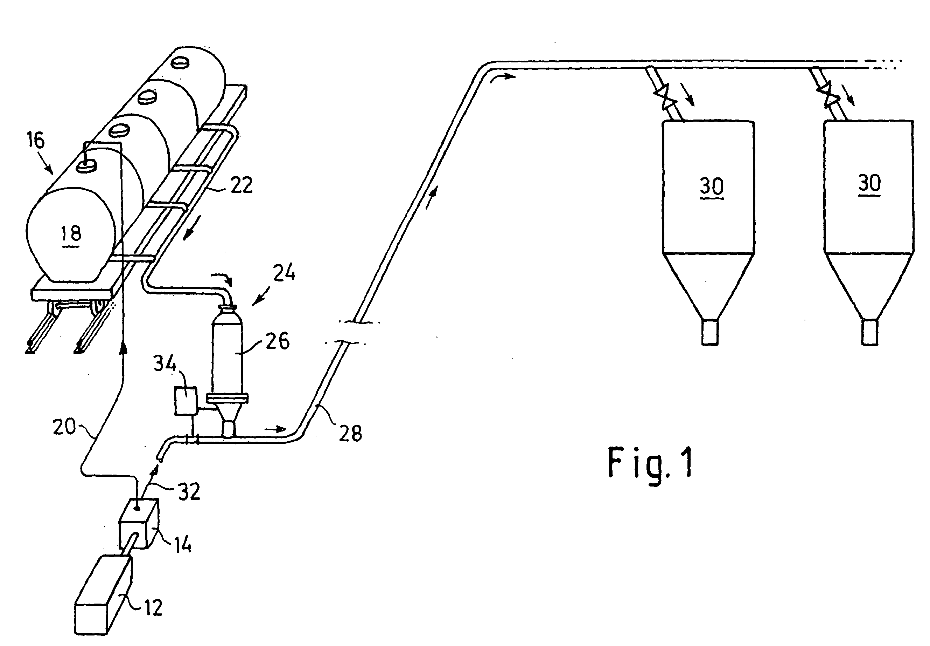

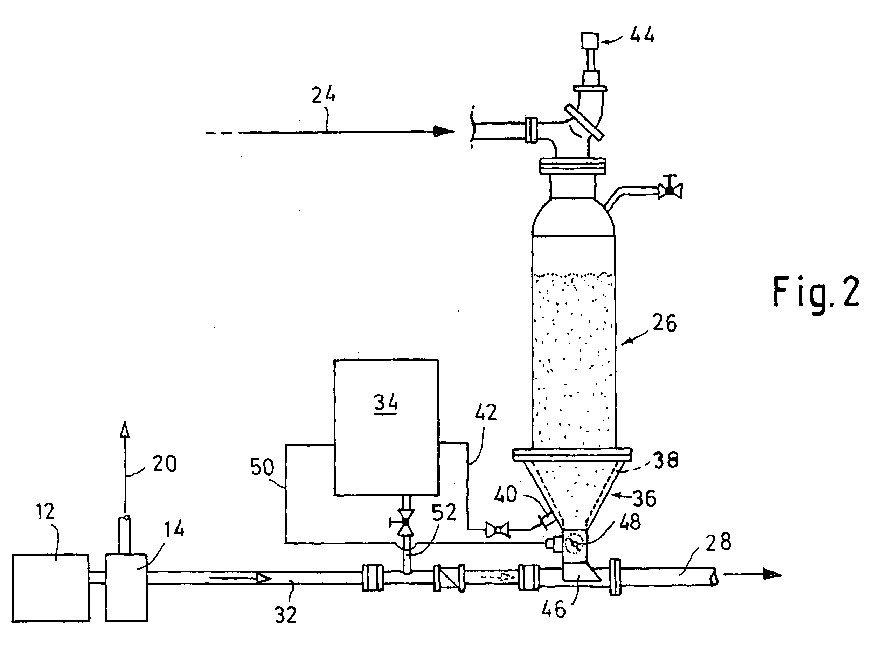

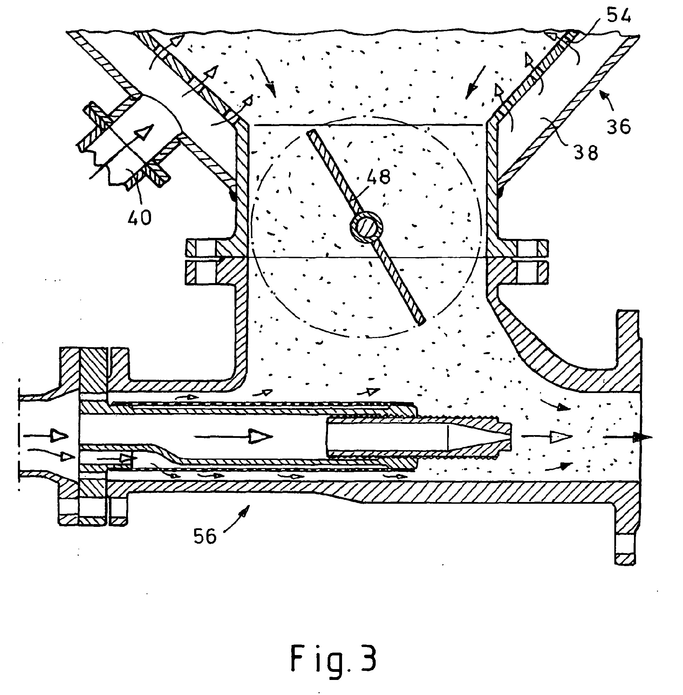

Figur 1 zeigt den Kompressor 12, den an diesen angeschlossenen Luftaufteiler 14, den Eisenbahn-Kesselwagen 16 mit vier Kesseln 18, mit der Zuluftleitung 20 zwischen Luftaufteiler 14 und einem Kessel 18, mit einer von den Kesseln 18 abgehenden Abluftleitung 22, und mit der Verbindung 24 zwischen der Abluftleitung 22 und dem Druckbehälter 26. Vom Druckbehälter 26 führt die Förderleitung 28 zu den einzelnen Silos 30. Vom Luftaufteiler 14 führt eine Zuluftleitung 32 zu dieser Förderleitung 28. Der Übergang erfolgt im Bereich der noch zu erläuternden Auflockerungs-Förderdüse. Figur 1 zeigt weiter noch das Steuergerät 34. Figur 2 zeigt zusätzlich den Konus 36 im unteren Bereich des Druckbehälters 26. Der Konus 36 weist den Doppelmantel 38 mit dem Lufteinlaßstutzen 40 auf. Dieser ist über die Zuluftleitung 42 an das Steuergerät 34 angeschlossen. Figur 2 zeigt weiter den Füllstandsanzeiger 44 des Druckbehälters 26 und dessen Auslauf 46. In diesem liegt die Auslaufklappe 48. Eine Steuerleitung 50 verläuft vom Steuergerät 34 zur Auslaufklappe 48. Das Steuergerät 34 ist weiter noch über eine Druckmeßleitung 52 an die Förderleitung 28 angeschlossen. Figur 3 zeigt den unteren Bereich des Druckbehälters 26 in größerer Deutlichkeit. Im einzelnen dargestellt sind die poröse Innenwand 54 des Doppelmantels 38 und die Auflockerungs-Förderdüse 56.

Nach dieser Einzelbeschreibung kann ein Arbeitsablauf erläutert werden.

Ein Eisenbahn-Kesselwagen 16 oder ein Straßen-Silofahrzeug steht am Gleisanschluß und soll entladen werden. Die Zuluftleitung 20 wird an den Eintrittsstutzen eines Kessel 18 oder eines Silo angeschlossen. Die Abluftleitung 22 wird an einen Austrittsstutzen des Kessels 18 oder eines Silos angeschlossen. Der Kompressor 12 wird eingeschaltet. Der Luftaufteiler 14 teilt die von diesem abgegebene Druckluft in die Luft zum Leeren eines Kessels 18 oder eines Silos und die Luft zum Fördern des Gutes über die lange Strecke auf. Ein Teil der Kompressorluft tritt über die Zuluftleitung 20 in einen Kessel 18 des Eisenbahn-Kesselwagens oder in ein Silo eines Straßenfahrzeuges ein. Von dort gelangt das Gut in die Abluftleitung 22 und von dieser in den Druckbehälter 26. In diesem läuft es bis zu der am Füllstandsanzeiger 44 abzulesenden Füllhöhe auf. Es fällt im Druckbehälter 26 nach unten, durchläuft über den von der Auslaufklappe 48 freigegebenen Querschnitt im Auslauf 46 nach unten und gelangt in den Bereich der Auflockerungs-Förderdüse 56. Die über die poröse Innenwand 54 eingeblasene Luft fluidifiziert das Gut und hält dieses fließfähig. Im Bereich der Auflockerungs-Förderdüse 56 wird das Gut von der aus dieser austretenden Förderluft erfasst und in die Förderleitung 28 gedrückt. Diese durchläuft es bis es in ein oder mehrere Silos 30 eintritt. Das Steuergerät 34 mißt kontinuierlich den in der Förderleitung 28 herrschenden Druck. Der Solldruck wird in Abhängigkeit von der Länge der Förderleitung 28 und den Eigenschaften des zu fördernden Gutes bestimmt. Weicht der Istdruck nach oben oder unten vom Solldruck ab, wird die Auslaufklappe 48 in Schließ- oder Öffnungsrichtung bewegt. Das Steuergerät 34 bestimmt weiter die Menge der in den Doppelmantel 38 eingeblasenen Fluidifizierungsluft.

## Patentansprüche

1. Anlage zum Ausblasen von mit staub- oder granulatförmigem Gut gefüllten Eisenbahn-Kesselwagen (16) oder Straßen-Silofahrzeugen und Fördern des Gutes durch eine Förderleitung (28) über Strecken von bis zu einigen hundert Metern in ein oder mehrere Silos (30), mit einem Kompressor (12) zum Erzeugen von Druckluft, mit einer Leitung (20) zwischen dem Kompressor und den Kesselwagen oder den Silofahrzeugen und mit einer Verbindung (24) zwischen diesen und der Förderleitung (28), wobei die vom Kompressor (12) abgehende Druckluft in einen Teil zum Ausblasen der Kesselwagen (16) oder Silofahrzeuge und einen Teil zum Fördern des Gutes durch die Förderleitung (28) aufgeteilt wird, **dadurch gekennzeichnet, daß** in der Verbindung (24) zwischen den Eisenbahn-Kesselwagen (16) oder den Silofahrzeugen und der Förderleitung (28) ein Druckbehälter (26) liegt, der Druckbehälter (26) in seinem Auslauf (46) eine steuerbare Auslaufklappe (48) aufweist und diese in Abhängigkeit von dem Druck in der Förderleitung (28) gesteuert wird.

2. Anlage nach Anspruch 1, **dadurch gekennzeichnet, daß** die Auslaufklappe (48) bei einem Ansteigen des Druckes in der Förderleitung (28) in Schließrichtung verstellt wird und umgekehrt.

3. Anlage nach Anspruch 2, **dadurch gekennzeichnet, daß** ein mit Transmitter bezeichnetes Steuergerät (34) über eine Druckmeßleitung (52) an die Förderleitung (28) angeschlossen ist und die Auslaufklappe (48) über eine Steuerleitung (50) steuert.

4. Anlage nach Anspruch 1, **dadurch gekennzeichnet, daß** der Kompressor (12) über eine Druckluft-Zuleitung (20) an einen Eisenbahn-Kesselwagen (16) oder ein Silofahrzeug anschließbar ist und über eine weitere Druckluft-Zuluft-Leitung (32) an die Förderleitung (28) angeschlossen ist.

5. Anlage nach Anspruch 1, **dadurch gekennzeichnet, daß** der Druckbehälter (26) an seinem Auslauf (46) einen einen Doppelmantel (38) aufweisenden Konus (36) aufweist, die Innenwand (54) des Doppelmantels (38) porös ist und der Doppelmantel (38) über eine vom Steuergerät (34) gesteuerte Zuluftleitung (42) mit Auflockerungsluft beschickt wird.

6. Anlage nach einem der Ansprüche 1 bis 5, **dadurch gekennzeichnet, daß** die Förderleitung (28) im Bereich des Auslaufs (46) des Druckbehälters (26) unter der Auslaufklappe (48) eine Auflockerungs-Förderdüse (56) aufweist.

7. Anlage nach Anspruch 1, **dadurch gekennzeichnet, daß** im Luftweg hinter dem Kompressor (12) ein Luftaufteiler (14) liegt, der die Luft in einen Teil zum Ausblasen der Eisenbahn-Kesselwagen (16) oder Straßen-Silofahrzeuge und einen Teil zum Fördern des Gutes durch die Förderleitung (28) aufteilt.

## Claims

1. A system for blowing out railroad tank cars (16) or silo-type road vehicles filled with powdery or granular material and for transporting the material into one or more silos (30) through a delivery pipe (28) over distances as long as a few hundred meters, with a compressor (12) for generating compressed air, with a pipe (20) between the compressor and the tank cars or silo-type vehicles, and with a connection (24) between the tank cars or silo-type vehicles and the delivery pipe (28), wherein the compressed air generated by the compressor (12) is divided into a portion for blowing out the tank cars (16) or silo-type vehicles and a portion for transporting the material through the delivery pipe (28), **characterized in that** a pressure tank (26) is arranged in the connection (24) between the railroad tank cars (16) or silo-type vehicles and the delivery pipe (28), **in that** the outlet (46) of the pressure tank (26) contains a controllable outlet valve (48), and **in that** said outlet valve is controlled in dependence on the pressure in the delivery pipe (28).

2. The system according to Claim 1, **characterized in that** the outlet valve (48) is adjusted in the closing direction when the pressure in the delivery pipe (28) increases and vice versa.

3. The system according to Claim 2, **characterized in that** a control device (34) referred to as transmitter is connected to the delivery pipe (28) via a pressure sensing line (52) and controls the outlet valve (48) via a control line (50).

4. The system according to Claim 1, **characterized in that** the compressor (12) can be connected to a railroad tank car (16) or silo-type vehicle via a compressed air feed pipe (20) and is connected to the delivery pipe (28) via another compressed air feed pipe (32).

5. The system according to Claim 1, **characterized in that** the outlet (46) of the pressure tank (26) features a cone (36) with a double shell (38), **in that** the inner wall (54) of the double shell (38) is porous, and **in that** the double shell (38) is charged with disaggregation air via an air feed pipe (42) that is controlled by the control device (34).

6. The system according to one of Claims 1 to 5, **characterized in that** the delivery pipe (28) features a disaggregation feed nozzle (56) in the region of the outlet (46) of the pressure tank (26) underneath the outlet valve (48).

7. The system according to Claim 1, **characterized in that** an air divider (14) is arranged downstream of the compressor (12) referred to the air flow direction and divides the air into a portion for blowing out the railroad tank cars (16) or silo-type road vehicles and a portion for transporting the material through the delivery pipe (28).

## Revendications

1. Installation de vidage par soufflage de wagons-citernes ferroviaires (16) ou de véhicules à silos routiers remplis de produit sous forme de poudre ou de granulat et de convoyage du produit par une conduite de convoyage (28) sur des trajets allant jusqu'à quelques centaines de mètres vers un ou plusieurs silos (30), comportant un compresseur (12) pour générer de l'air comprimé, une conduite (20) entre le compresseur et les wagons-citernes ou les véhicules à silos et une connexion (24) entre ceux-ci et la conduite de convoyage (28), dans laquelle l'air comprimé sortant du compresseur (12) est réparti en une partie servant à vider par soufflage les wagons-citernes (16) ou les véhicule à silos et une partie servant à convoyer le produit dans la conduite de convoyage (28), **caractérisée en ce que**, dans la connexion (24) entre les wagons-citernes ferroviaires (16) ou les véhicules à silo et la conduite de convoyage (28), il y a un réservoir à pression (26), que ce réservoir à pression (26) présente à sa sortie (46) une valve d'évacuation contrôlable (48) et que celle-ci est commandée en fonction de la pression dans la conduite de convoyage (28).

2. Installation selon la revendication 1, **caractérisée en ce que** la valve d'évacuation (48), en cas de hausse de la pression dans la conduite de convoyage (28), est mise en position de fermeture et inversement.

3. Installation selon la revendication 2, **caractérisée en ce qu'**un appareil de commande appelé transmetteur (34) est raccordé par une ligne de mesure de pression (52) à la conduite de convoyage (28) et commande la valve d'évacuation (48) par le biais d'une ligne de commande (50).

4. Installation selon la revendication 1, **caractérisée en ce que** le compresseur (12) peut être raccordé par une canalisation d'air comprimé (20) à un wagon-citerne ferroviaire (16) ou à un véhicule à silo et est raccordé par une autre canalisation d'air comprimé (32) à la conduite de convoyage (28).

5. Installation selon la revendication 1, **caractérisée en ce que** le réservoir à pression (26) comporte à sa sortie (46) un cône (36) équipé d'une double chemise (38), que la paroi interne (54) de la double chemise (38) est poreuse et que la double chemise (38) est alimentée en air de décongestion par une canalisation à air (42) contrôlée par l'appareil de commande (34).

6. Installation selon une des revendications 1 à 5, **caractérisée en ce que** la conduite de convoyage (28) comporte, au niveau de la sortie (46) du réservoir à pression (26), sous la valve d'évacuation (48), une buse convoyeuse de décongestion (56).

7. Installation selon la revendication 1, **caractérisée en ce que**, dans la voie de l'air derrière le compresseur (12), se trouve un répartiteur d'air (14) qui répartit l'air en une partie servant à vider par soufflage les wagons-citernes ferroviaires (16) ou les véhicules à silo routiers et une partie servant à transporter le produit dans la conduite de convoyage (28).
